# FASCICULE DE BREVET EUROPEEN

(11) **EP 2 186 761 B1**
(45) Date de publication et mention de la délivrance du brevet: **25.07.2012**
(21) Numéro de dépôt: 09173763.5
(22) Date de dépôt: 22.10.2009
(51) Int. Cl.: B65G 61/00, B25J 9/16, F16P 3/14

(54) **Installation de palettisation combinée avec accès sécurisé**
Palettierungsanlage, kombiniert mit gesichertem Zugang
Combined palletisation facility with secure access.

(30) Priorité: 14.11.2008 FR 0857727
(43) Date de publication de la demande: 19.05.2010
(73) Titulaire: SIDEL PARTICIPATIONS, 76930 Octeville-sur-Mer (FR)
(72) Inventeur: Mougin, Didier, 76930 Octeville sur Mer (FR); Alix, Christophe, 76930 Octeville sur Mer (FR)
(74) Mandataire: Cabinet Plasseraud

(56) Documents cités:
- EP-A- 1 231 170
- WO-A-2008/043912
- US-A1- 2004 125 206
- US-A1- 2007 211 395

## Description

La présente invention concerne une installation qui comprend, de façon combinée, un poste robotisé de palettisation de caisses en carton et une machine d'emballage qui façonne lesdites caisses et réalise leur remplissage avec des produits préalablement conditionnés.

D'une manière générale, les installations robotisées présentent, quelles qu'elles soient, un caractère de dangerosité important pour les opérateurs qui sont amenés à s'approcher du robot.

Le document EP 1 231 170 décrit une installation selon le préambule de la revendication 1 comprenant une machine d'emballage de produits, un robot qui prélève les caisses remplies avec les produits, en sortie de la machine d'emballage pour les disposer, selon un schéma approprié, au moyen d'une tête de préhension, sur une palette qui jouxte ladite sortie.

Aussi, pour ce type d'installation de palettisation robotisée, les opérations de sortie de palettes pleines et d'insertion de palettes vides sont généralement réalisées au moyen d'un convoyeur du type automatique ; toutefois, une telle installation implique l'utilisation d'une surface au sol beaucoup plus importante.

Pour des installations compactes, comme celle qui fait l'objet de l'invention, où le palettiseur robotisé est combiné directement avec une machine qui réalise l'emballage des produits, il est classique de mettre l'installation en sécurité, c'est-à-dire d'arrêter le robot, lorsqu'une intervention manuelle doit être réalisée par un opérateur, comme le retrait d'une palette qui est pleine de caisses ou comme l'insertion d'une palette vide, et cela pendant tout le temps nécessaire à l'opération ; mais l'arrêt du robot de palettisation implique aussi un arrêt de la machine d'emballage à laquelle il est associé.

Ces arrêts de la machine d'emballage provoquent des pertes de production et ils peuvent également perturber la production en amont, comme celle qui réalise, par exemple, l'étiquetage ou le conditionnement primaire des produits.

On connaît également, comme décrit dans le document US 2007/211395, une installation comprenant un robot associé à des moyens qui permettent de limiter son champ d'évolution pour concentrer les déplacements de sa tête dans un espace restreint qui n'empiète pas sur l'espace de sécurité.

La présente invention propose un perfectionnement à ce type d'installation compacte qui combine une machine d'emballage et un palettiseur ; elle permet en particulier d'offrir une grande sécurité pour l'opérateur chargé d'intervenir au niveau du poste de palettisation et, surtout, elle permet cette intervention de l'opérateur sans rendre obligatoire un arrêt de la ou des fonctions qui sont immédiatement en amont, tout en conservant une surface au sol réduite.

L'installation selon l'invention est constituée d'une machine d'emballage de produits et d'un poste de palettisation robotisé dont le robot prélève les caisses remplies avec lesdits produits en sortie de ladite machine d'emballage pour les disposer, selon un schéma approprié, au moyen d'une tête de préhension, sur une palette qui jouxte ladite sortie, ladite machine d'emballage et ledit poste de palettisation étant disposés dans une même enceinte fermée qui est constituée de parois latérales, d'une paroi arrière au niveau de laquelle pénètrent, notamment, les cartons servant au façonnage desdites caisses, et d'une paroi frontale qui est munie d'une porte offrant l'accès audit poste de palettisation, laquelle installation comprend des moyens qui limitent le champ d'évolution dudit robot dans ladite enceinte fermée pour concentrer les déplacements de sa tête de préhension dans un espace restreint qui n'empiète pas sur l'espace de sécurité qui se définit au moins en fonction d'une distance minimale mesurée à partir d'un moyen de détection d'intrusion qui se situe au niveau de l'ouverture de la porte d'accès au poste de palettisation, lesquels moyens de limitation du champ d'évolution du robot sont constitués :
- d'une came, du type électrique, qui assure que le robot ne sort pas de la zone de travail autorisée et limite, notamment, l'amplitude de son mouvement autour de son axe principal,
- d'un organe, du genre commutateur, qui prend en compte une demande d'intervention de l'opérateur pour accéder au poste de palettisation afin de retirer la palette pleine de caisses et de la remplacer par une palette vide,
- d'une commande de pilotage dudit robot, du genre automate, qui gère ladite demande de l'opérateur pour activer ladite came électrique et faire fonctionner ledit robot dans ledit espace restreint compris à l'intérieur du volume d'évolution autorisé et programmé au niveau de ladite commande de pilotage.

Toujours selon l'invention, l'espace restreint dans lequel intervient le robot comporte au moins une zone tampon qui est aménagée comme une plateforme pour permettre une dépose provisoire des caisses de produits fabriqués par la machine d'emballage, laquelle plateforme est, notamment, accessible par ledit robot, pendant l'opération d'extraction de la palette prête et pendant la mise en place d'une nouvelle palette à remplir.

Selon une forme de réalisation de l'invention, l'installation comprend, au niveau de la commande de pilotage du robot, des moyens pour modifier les vitesses d'évolution du robot et en particulier pour réduire lesdites vitesses pendant sa phase de fonctionnement dans l'espace restreint qui lui est alloué.

Toujours selon une forme de réalisation de l'invention, la commande de pilotage du robot gère également l'ensemble des mouvements dudit robot tout en s'assurant qu'il ne sort pas de la zone de travail qui est programmée, c'est-à-dire que cette commande de pilotage du robot comprend des moyens pour définir des espaces de travail dans lesquels le robot est autorisé à fonctionner ainsi que des moyens pour provoquer son arrêt immédiat et total s'il quitte ces espaces de fonctionnement autorisés.

Selon une autre forme de réalisation de l'invention, l'installation comprend un capteur qui est associé à la porte d'accès à la palette, lequel capteur autorise, par l'intermédiaire de la commande de pilotage du robot, la poursuite de l'activité du robot dans son espace restreint si l'opérateur a demandé l'accès au poste de palettisation, ou provoque l'arrêt immédiat et total de ladite installation en cas d'absence d'une demande d'accès ou dans le cas où ladite porte d'accès est manoeuvrée avant la réception de l'autorisation d'ouverture qui est donnée par l'intermédiaire d'un voyant lumineux associé au commutateur.

Toujours selon une autre forme de réalisation de l'invention, le moyen de détection d'une intrusion est du type barrière immatérielle, et est disposé de façon à permettre l'introduction d'une palette vide et de façon à provoquer l'arrêt immédiat et total de l'installation en cas d'intrusion de quiconque dans ledit espace de sécurité.

Selon une autre forme de réalisation de l'invention, l'installation comporte, associés à la barrière immatérielle, des moyens d'inhibition de cette dernière, lesquels moyens sont constitués de cellules photo-électriques pour permettre l'extraction de la palette pleine sans provoquer l'arrêt immédiat et total de ladite installation.

Toujours selon une autre forme de réalisation de l'invention, l'installation comprend des moyens de signalisation de la fin du cycle de préparation d'une palette avec les caisses de produits qui sortent de la machine de conditionnement, lesquels moyens sont en forme de dispositif lumineux.

Selon e l'invention, l'installation comprend, dans l'espace restreint, un ou plusieurs dispositifs complémentaires qui sont accessibles par le biais du robot comme, par exemple, un poste d'étiquetage des caisses et/ou une zone de récupération et de transfert des caisses destinées aux rebuts, ladite zone de récupération étant équipée d'un tapis convoyeur pour évacuer lesdits rebuts vers l'extérieur de l'installation.

Mais l'invention sera encore détaillée à l'aide de la description suivante et des dessins annexés, donnés à titre indicatif, et dans lesquels :
- la figure 1 est une vue générale schématique en perspective d'une installation selon l'invention qui combine une machine de conditionnement de produits et un poste de palettisation ;
- la figure 2 est une vue schématique en plan de l'installation selon l'invention ;
- la figure 3 est une vue de côté partielle de l'installation montrant le poste de palettisation et les moyens d'anti-intrusion, en forme de barrières immatérielles.

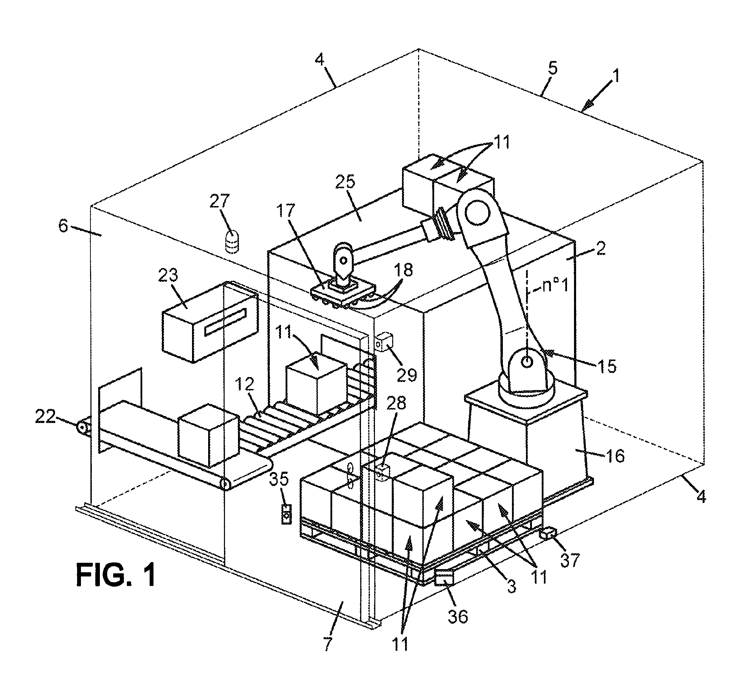

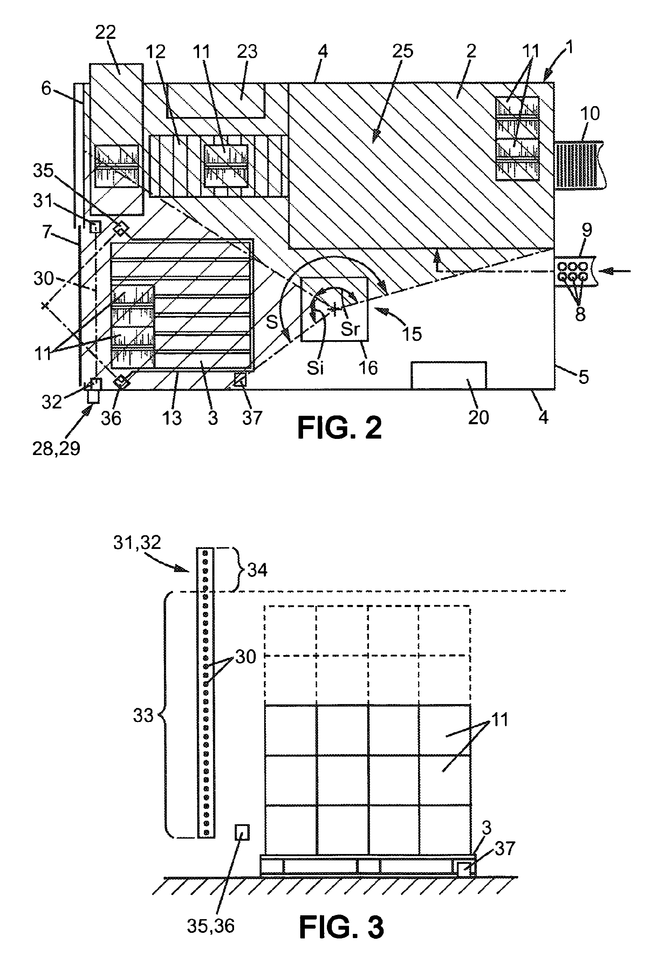

L'installation représentée figures 1 et 2, comprend, rassemblés dans une enceinte 1 qui est fermée, une machine 2 d'emballage de produits et un poste pour la palette 3 où s'effectue l'opération de palettisation automatique.

L'enceinte 1 est fermée par des parois 4 latérales, une paroi 5 arrière et une paroi 6 frontale qui comporte une porte 7 pour permettre l'accès à la palette 3 qui se situe au poste de palettisation.

La machine 2 de conditionnement est, par exemple, une machine du type de celle décrite dans le document FR 2 907 100. Elle est alimentée en produits 8 de façon régulière au moyen d'un convoyeur 9, représenté figure 2, qui introduit lesdits produits 8 par la paroi 5 arrière de l'enceinte 1. Cette machine 2 comporte également un magasin 10, représenté également figure 2, qui permet de l'alimenter en découpes de carton en vue du façonnage des caisses 11.

Les produits 8 sont positionnés dans les caisses 11 par la machine 2 et ces caisses 11 sortent de ladite machine 2 sur un convoyeur 12 qui s'étend longitudinalement dans l'enceinte 1.

Le poste de palettisation peut comporter un cadre 13, représenté figure 2, qui permet de centrer les palettes 3 dans une zone qui se situe en face de la porte 7, et sur le côté du convoyeur 12.

Un robot 15 est disposé derrière le poste de palettisation, sur le côté de la machine 2 d'emballage. Ce robot 15 est monté sur un socle 16 qui est posé au sol ou qui est solidaire du châssis général de toute l'installation. Ce robot 15 comporte plusieurs bras et il pivote autour de son axe principal n°1 qui est un axe vertical, lequel axe n°1 correspond au premier axe par rapport au socle 16.

Ce robot 15 est équipé d'une tête de préhension 17 qui est située à l'extrémité de ses différents bras. Cette tête de préhension 17, équipée de ventouses 18, capte les caisses 11 pour les disposer selon un schéma approprié sur la palette 3.

Le volume V dans l'enceinte 1, dans lequel le robot 15 est autorisé à évoluer, est programmé dans une commande 20 de pilotage dudit robot 15 et cette commande, du genre automate, est intégrée à ladite enceinte 1.

L'ensemble de l'installation fonctionne avec cette commande 20 de pilotage du robot 15 qui est chargée, avec des programmes appropriés, de faire fonctionner le robot 15 et, en particulier, de permettre l'opération de palettisation des caisses 11 selon un schéma adapté auxdites caisses et à la palette 3.

Ce robot 15 peut aussi coopérer avec des équipements complémentaires comme, par exemple, un convoyeur 22 disposé à l'extrémité aval du convoyeur 12, lequel convoyeur 22 récupère d'éventuels rebuts et il les transfère vers l'extérieur de l'installation.

Le robot 15 peut également coopérer avec un appareil 23 qui réalise l'étiquetage des caisses 11 avant de les disposer sur la palette 3.

La machine 2 d'emballage fonctionne de façon continue ; elle fonctionne au rythme de son approvisionnement en produits 8. Le robot 15 assure la palettisation des caisses 11 au fur et à mesure de leur sortie de la machine 2 ; sa tête 17 de préhension des caisses 11 circule dans un volume qui est programmé dans la commande 20 de pilotage du robot 15 et ce volume V est compris dans l'enceinte 1 pour placer lesdites caisses 11 selon le schéma de répartition prévu pour la palette 3.

Lorsque la palette 3 est pleine, le robot 15 est programmé pour continuer à fonctionner et à prendre en charge les caisses 11 qui continuent à sortir de la machine 2 d'emballage.

L'installation comporte une zone tampon qui se présente sous la forme d'une plateforme 25 aménagée, par exemple, au-dessus de la machine 2 d'emballage et cette zone tampon permet au robot 15 de déposer temporairement les caisses 11, le temps qu'un opérateur intervienne pour retirer la palette 3, qui est pleine, et qu'il installe une nouvelle palette au poste de palettisation.

Pour permettre à l'opérateur d'intervenir en toute sécurité, le robot 15 comporte des moyens qui permettent de limiter l'amplitude maximum de ses mouvements dans le volume V. Ces moyens de limitation de l'amplitude, connus sous le nom de came électrique, permettent de définir, d'autoriser et/ou d'interdire des secteurs d'évolutions du robot 15 autour de son axe principal n°1.

La commande 20 de pilotage du robot 15 gère, par l'intermédiaire de cette came électrique, l'ensemble des mouvements dudit robot 15 tout en s'assurant qu'il ne sort pas de la zone de travail qui est programmée, c'est-à-dire que cette commande 20 de pilotage comprend des moyens pour définir les espaces de travail dans lesquels ledit robot est autorisé à fonctionner ainsi que des moyens pour provoquer son arrêt immédiat et total s'il quitte ces espaces de fonctionnement autorisés.

Sur la figure 2, on remarque que le robot 15 dispose d'un grand secteur S d'intervention qui correspond à la projection horizontale du volume V. Ce grand secteur S est la somme de deux secteurs Sr et Si : - le secteur Si qui correspond à un espace dans lequel la présence du robot 15 peut être interdite momentanément et - le secteur Sr qui correspond à un espace restreint dans lequel ledit robot 15 peut fonctionner selon un programme adapté à la situation, comme expliqué ci-après.

L'espace interdit au robot 15, qui correspond au secteur Si, s'étend à l'intérieur du secteur S à partir du cadre de la porte 7. Cet espace interdit correspond à un volume minimum qui est défini par une distance mesurée au moins à partir de moyens, détaillés plus loin, qui permettent de détecter une intrusion dans l'enceinte 1 ; ces moyens de détection se situent au-delà de la porte 7, à l'intérieur de ladite enceinte 1 et cette distance minimale est de l'ordre de 50 cm dans l'installation telle que représentée sur les figures ; cette distance peut varier selon le type de robot et en particulier en fonction de la distance d'arrêt dudit robot lors d'un arrêt d'urgence.

En fonctionnement normal, lorsque la porte 7 est fermée, le robot 15 a toute latitude pour fonctionner dans l'espace qui correspond au secteur S.

Lorsque la palette 3 est pleine, et que l'opérateur intervient pour, d'une part, évacuer cette palette pleine et, d'autre part, positionner une nouvelle palette 3, l'espace d'intervention du robot 15 est limité au secteur Sr qui est le secteur restreint, c'est-à-dire à un secteur qui permet au robot 15 de saisir les caisses 11 en sortie de la machine 2 et de les placer dans la zone de stockage temporaire, sur la plateforme 25 qui fait office de tampon.

Dans ce secteur Sr, la commande 20 de pilotage du robot 15 peut être programmée pour que ce dernier fonctionne à des vitesses qui sont inférieures à celles qu'il utilise dans le secteur S, c'est-à-dire dans le secteur qui correspond à son cycle normal de fonctionnement.

Le secteur Si correspond, pour le robot 15, à l'espace qui est sécurisé et dans lequel il y a un danger pour l'opérateur, notamment lors de son intervention pour sortir la palette qui est pleine et pour introduire une nouvelle palette 3.

Pour effectuer cette opération de sortie de palette pleine et d'introduction d'une nouvelle palette 3, l'opérateur est tout d'abord averti. Des moyens, constitués d'un avertisseur 27, du type lumineux ou autre, installé sur l'enceinte 1, lui signalent que la palette est pleine.

Pour réaliser cette opération d'extraction de la palette pleine et pour installer une nouvelle palette 3 dans le cadre 13, l'opérateur dispose d'un organe du type commutateur 28. Ce commutateur 28 lui permet de transmettre à la commande 20 de pilotage du robot 15, son intention d'accéder au poste de palettisation.

Dans ce cas, le robot 15 termine sa tâche en cours et va se positionner dans le secteur Sr. Dès cet instant, par le biais de la commande 20 de pilotage, le robot 15 est cantonné dans ce secteur Sr, c'est-à-dire dans le secteur restreint qui lui permet, notamment, de prélever les caisses 11 à la sortie de la machine 2 et de les déposer de façon temporaire sur la plateforme 25.

La vitesse de travail du robot 15, lors du cycle normal de palettisation, est suffisamment élevée pour lui permettre de reprendre ultérieurement les caisses 11 stockées sur la plateforme 25 et pour les ranger sur la palette avec les autres caisses qui sortent de la machine 2 d'emballage.

D'autre part, dès l'instant où le robot 15 se trouve dans le secteur Sr, un signal lumineux du type voyant lumineux, associé au commutateur 28, signale à l'opérateur que toutes les conditions de sécurité sont réunies et qu'il est autorisé à ouvrir la porte 7.

Toujours pour la sécurité de l'opérateur, l'installation comporte un capteur 29 qui coopère avec la porte 7 pour signaler, à la commande 20 de pilotage du robot 15, que ladite porte est en position fermée ou en position ouverte.

Ce capteur 2 permet de mettre en sécurité l'installation si la porte 7 est manipulée par une personne quelconque, sans y avoir été autorisé au préalable, c'est-à-dire avant que le voyant lumineux du commutateur 28 ne soit allumé.

Compte tenu du fait que le robot 15 fonctionne dans son espace Sr restreint lorsque la porte 7 est ouverte, une barrière 30 immatérielle, représentée figure 2 et 3, permet de mettre l'installation en sécurité, c'est-à-dire de l'arrêter, si l'opérateur ou une autre personne pénètre dans l'enceinte 1 par la porte 7.

Cette barrière 30 est constituée de rampes 31 et 32 qui sont verticales. Ces rampes comportent des cellules photoélectriques et elles sont disposées dans l'enceinte 1, à distance de la porte 7, derrière le cadre de cette dernière. De préférence, la distance qui définit l'espace interdit au robot 15, lorsque la porte 7 est ouverte, se mesure à partir de la barrière 30 immatérielle ; cette distance est, par exemple, de l'ordre de 50 cm comme indiqué précédemment.

La figure 3 montre l'implantation de la barrière 30 immatérielle, sur la hauteur de l'ouverture de l'enceinte 1. Les rampes 31 et 32 de cette barrière 30 sont disposées à une certaine distance du niveau du sol, de l'ordre de 30 cm, par exemple ; ladite barrière 30 se situe en fait à un niveau qui est au-dessus du niveau supérieur de la palette 3, lorsqu'elle est vide bien sûr, de façon à permettre l'introduction de cette palette 3 dans le cadre 13, au poste de palettisation, sans risquer de couper les faisceaux des cellules de ladite barrière 30 immatérielle.

Pour améliorer la sécurité, cette barrière 30 peut aussi comporter une première zone 33 active qui s'étend jusqu'à une hauteur correspondant à celle de la palette pleine et une seconde zone 34, active également, mais de façon permanente.

La zone 33 de la barrière 30 immatérielle peut être mise en situation inactive, le temps de sortir la palette pleine. Des moyens permettent d'inhiber cette zone 33 de la barrière 30 ; ils sont constitués, par exemple, d'une paire de cellules 35, 36, qui se situent à l'intérieur de l'enceinte 1.

Au moment de sa sortie, la palette pleine coupe les faisceaux des cellules 35 et 36 d'inhibition avant ceux de la barrière 30, ce qui a pour effet, par l'intermédiaire de la commande 20 de pilotage, de désactiver ladite barrière pendant la phase de sortie de ladite palette pleine.

L'inhibition de la barrière 30 immatérielle est annulée dès que la palette pleine n'est plus en face des faisceaux des cellules de ladite barrière 30.

L'introduction d'une nouvelle palette 3 au poste de palettisation s'effectue sans couper les différents faisceaux car ladite palette vide passe sous le niveau des différents faisceaux.

Toujours sur la figure 3, on remarque la présence d'un capteur 37 qui permet de signaler, à la commande 20 de pilotage du robot 15, la présence ou l'absence d'une palette au poste de palettisation.

Après l'extraction de la palette pleine et la remise en place d'une palette vide, l'opérateur referme la porte 7 et relance le cycle normal du robot 15 par une nouvelle intervention sur le commutateur 28. Après validation de la fermeture de la porte 7 par le capteur 29, le robot 15 reprend, sous contrôle de la commande 20 de pilotage, son activité sur la totalité du secteur S, à savoir : préhension des caisses 11 sur le convoyeur 12 en sortie de la machine 2 d'emballage et/ou préhension des caisses stockées sur la plateforme 25 en vue de leur palettisation.

## Revendications

1. Installation constituée d'une machine (2) d'emballage de produits (8) et d'un poste robotisé de palettisation dont le robot (15) prélève les caisses (11) remplies avec lesdits produits en sortie de ladite machine (2) d'emballage pour les disposer, selon un schéma approprié, au moyen d'une tête (17) de préhension, sur une palette (3) qui jouxte ladite sortie, ladite machine (2) d'emballage et ledit poste de palettisation étant disposés dans une même enceinte (1) fermée qui est constituée de parois (4) latérales, d'une paroi (5) arrière et d'une paroi (6) frontale qui est munie d'une porte (7) offrant l'accès audit poste de palettisation,
**caractérisée en ce qu'**elle comprend :
- au moins une zone tampon située dans l'espace restreint (Sᵣ) dans lequel intervient le robot (15) et aménagée comme une plateforme (25) pour permettre, au moyen dudit robot (15), une dépose provisoire des caisses (11) fabriquées par la machine (2) d'emballage, laquelle plateforme (25) est accessible par ledit robot (15) la commande (20) de pilotage dudit robot (15) étant programmé de manière à ce que le robot (15) dépose provisoirement les caisses (11) fabriquées par la machine (2) d'emballage pendant l'opération d'extraction de la palette prête et pendant la mise en place d'une nouvelle palette à remplir.
- un moyen de détection d'intrusion (30) qui se situe au niveau de ladite porte (7),
- des moyens qui limitent le champ d'évolution dudit robot (15) dans ladite enceinte (1) fermée pour concentrer les déplacements de sa tête (17) de préhension dans un espace restreint (Sᵣ) qui n'empiète pas sur l'espace de sécurité qui se définit en fonction d'une distance minimale mesurée à partir dudit moyen de détection d'intrusion (30), lesquels moyens de limitation du champ d'évolution dudit robot (15) sont constitués :
- d'une came, du type électrique, qui limite l'amplitude du mouvement dudit robot (15) autour de son axe principal (n°1),
- d'un organe, du genre commutateur (28), qui prend en compte une demande d'intervention de l'opérateur pour accéder au poste de palettisation afin de retirer la palette pleine de caisses (11) et de la remplacer par une palette vide,
- d'une commande (20) de pilotage dudit robot (15) qui gère ladite demande de l'opérateur pour activer ladite came électrique et faire fonctionner ledit robot (15) dans ledit espace restreint (Sᵣ) compris à l'intérieur du volume (v) d'évolution autorisé et programmé au niveau de ladite commande (20) de pilotage,

2. Installation selon la revendication 1, **caractérisée en ce qu'**elle comprend, au niveau de la commande (20) de pilotage du robot, des moyens pour modifier les vitesses d'évolution du robot (15) et en particulier pour réduire lesdites vitesses pendant la phase de fonctionnement dudit robot (15) dans l'espace restreint (Sᵣ) qui lui est alloué.

3. Installation selon la revendication 1, **caractérisée en ce qu'**elle comprend, au niveau de la commande (20) de pilotage du robot (15), des moyens pour définir des espaces de travail dans lesquels ledit robot (15) est autorisé à fonctionner et des moyens pour provoquer son arrêt immédiat et total s'il quitte ces espaces de fonctionnement autorisés.

4. Installation selon la revendication 1, **caractérisée en ce qu'**elle comprend un capteur (29) associé à la porte (7) qui permet l'accès au poste de palettisation, lequel capteur (29) autorise, par l'intermédiaire de la commande (20) de pilotage du robot (15), la poursuite de l'activité de ce dernier dans son espace restreint (Sᵣ) si l'opérateur a demandé l'accès au poste de palettisation, ou provoque l'arrêt immédiat et total de ladite installation en cas d'absence d'une demande d'accès ou dans le cas où la porte (7) est ouverte avant la réception de l'autorisation qui est donnée par l'intermédiaire d'un voyant lumineux associé au commutateur (28).

5. Installation selon la revendication 1, **caractérisée en ce que** le moyen de détection d'une intrusion du type barrière immatérielle, et est disposé de façon à permettre l'introduction d'une palette vide, et de façon à provoquer l'arrêt immédiat et total de ladite installation en cas d'intrusion de l'opérateur ou autre.

6. Installation selon la revendication 5, **caractérisée en ce qu'**elle comporte, associés à la barrière (30) immatérielle, des moyens d'inhibition de cette dernière, lesquels moyens sont constitués de cellules (35, 36) photo-électriques pour permettre l'extraction de la palette pleine sans provoquer l'arrêt d'urgence de ladite installation.

7. Installation selon la revendication 1, **caractérisée en ce qu'**elle comprend des moyens de signalisation de la fin du cycle de préparation d'une palette avec les caisses (11) de produits qui sortent de la machine (2) de conditionnement, lesquels moyens sont en forme d'avertisseur (27) lumineux.

8. Installation selon la revendication 1, **caractérisée en ce qu'**elle comprend, dans l'espace restreint (Sᵣ) un dispositif complémentaire accessible par le robot (15), du genre poste (23) d'étiquetage des caisses.

9. Installation selon la revendication 1, **caractérisée en ce qu'**elle comprend, dans l'espace restreint (Sᵣ) un dispositif complémentaire accessible par le robot (15), du genre tapis convoyeur (22), pour évacuer des rebuts vers l'extérieur de l'installation.

## Claims

1. Installation constituted of a machine (2) for packaging products (8) and of a robotic palleting station of which the robot (15) takes the cases (11) filled with said products at the output of said machine (2) for packaging in order to arrange them, according to an appropriate diagram, by means of a gripping head (17), on a pallet (3) which is adjacent to said exit, said machine (2) for packaging and said palleting station being arranged in the same closed enclosure (1) which is constituted of lateral walls (4), a rear wall (5), and a front wall (6) which is provided with a door (7) providing the access to said palleting station,
**characterized in that** it comprises :
- means for detecting intrusion (30) which is located at the level of said door (7),
- means which limit the range of movement of said robot (15) in said closed enclosure (1) in order to concentrate the displacements of its gripping head (17) in a restricted space (Sr) which does not overlap onto the safety space which is defined according to a minimum distance measured using said means for detecting intrusion (30) , said means for limiting the range of movement of said robot (15) are constituted of:
- a cam, of the electric type, which limits the amplitude of the movement of said robot (15) around its main axis (no. 1),
- a member, of the switching type (28), which takes into account a request for intervention of the operator for access to the palleting station in order to remove the pallet full of cases (11) and to replace it with an empty pallet,
- a steering control (20) of said robot (15) which manages said request from the operator in order to activate said electric cam and operate said robot (15) in said restricted space (Sr) contained inside the authorised volume (V) of movement and programmed on said steering control (20),
- at least one buffer zone located in the restricted space (Sr) wherein the robot (15) intervenes and arranged as a platform (25) in order to allow, with the help of said robot (15), for the temporary setting down of the cases (11) produced by the machine (2) for packaging, said platform (25) can be accessed by said robot (15), the steering control (20) of said robot (15) being programmed so that the robot (15) temporary sets down the cases (11) produced by the machine (2) for packaging, during the operation of extracting the pallet that is ready and during the setting into place of a new pallet to be filled.

2. Installation according to claim 1, **characterised in that** it comprises, on the steering control (20) of the robot, means for modifying the speeds of movement of the robot (15) and in particular in order to reduce said speeds during the operating phase of said robot (15) in the restricted space (Sr) which is allocated to it.

3. Installation according to claim 1, **characterised in that** it comprises, on the steering control (20) of the robot (15), means for defining work spaces wherein said robot (15) is authorised to operate and means for causing its immediate and total stoppage if it leaves these authorised operating spaces.

4. Installation according to claim 1, **characterised in that** it comprises a sensor (29) associated to the door (7) which allows access to the palleting station, said sensor (29) authorising, by the intermediary of the steering control (20) of the robot (15), the continuation of the activity of the latter in its restricted space (Sr) if the operator has requested access to the palleting station, or causes the immediate and total stoppage of said installation in the event of the absence of an access request or in the case where the door (7) is open before the receiving of the authorisation which is given by the intermediary of a lighted indicator associated to the switch (28).

5. Installation according to claim 1, **characterised in that** the means for detecting an intrusion (30) is of the immaterial barrier type, and is arranged in such a way as to allow the introduction of an empty pallet and in such a way as to cause the immediate and total stoppage of the installation in the event of intrusion of the operator or other.

6. Installation according to claim 5, **characterised in that** it comprises, associated to the immaterial barrier (30), means for inhibiting the latter, said means are comprised of photoelectric cells (35, 36) in order to allow for the extraction of the full pallet without causing the immediate and total stoppage of said installation.

7. Installation according to claim 1, **characterised in that** it comprises means for signalling the end of the preparation cycle of a pallet with the cases (11) of products that are exiting the machine for conditioning (2), said means are in the form of a lighted warning indicator (27).

8. Installation according to claim 1, **characterised in that** it comprises, in the restricted space (Sr), an additional device that can be accessed by the robot (15), of the case labelling station (23) type.

9. Installation according to claim 1, **characterised in that** it comprises, in the restricted space (Sr), an additional device that can be accessed by the robot (15), of the conveyor belt (22) type, in order to evacuate scrap towards the exterior of the installation.

## Patentansprüche

1. Anordnung, gebildet aus einer Verpackungsmaschine (2) für Produkte (8) und einer Roboterpalettierungsstation, deren Roboter (15) die mit den Produkten gefüllten Kisten (11) im Ausgang der Verpackungsmaschine (2) abgreift, um sie nach einem zweckmäßigen Schema mittels eines Greifkopfes (17) auf einer Palette (3) anzuordnen, die an den Ausgang angrenzt, wobei die Verpackungsmaschine (2) und die Palettierungsstation in einer gemeinsamen Einfassung (1) angeordnet sind, die aus seitlichen Wänden (4) ausgebildet wird, und zwar mit einer hinteren Wand (5) und einer vorderen Wand (6), die mit einer Tür ausgestattet ist, die einen Zugang zur Palettierungsstation bereitstellt,
**dadurch gekennzeichnet, dass** sie aufweist:
- ein Eindringerfassungsmittel (30), das sich auf der Höhe der Tür (7) befindet,
- ein Mittel, das den Bewegungsbereich des Roboters (15) in der geschlossenen Einfassung (1) begrenzt, um die Versetzungen seines Greifkopfes (17) auf einen nicht in den Sicherheitsraum eindringenden eingeschränkten Raum (Sr) zu konzentrieren, der sich in Abhängigkeit eines minimalen Abstands, gemessen von dem Eindringerfassungsmittel (30), definiert, wobei das Begrenzungsmittel für den Bewegungsbereich des Roboters (15) gebildet wird durch:
- einen elektrischen Nocken, der den Bewegungsausschlag des Roboters (15) um seine Hauptachse (n°1) beschränkt,
- eine Schalteinrichtung (28), die eine Eingriffsanfrage des Bedieners für den Zugang zu der Palettierungsstation erfasst, um die mit Kisten (11) gefüllte Palette herauszunehmen und sie mit einer leeren Palette zu ersetzen, und
- eine Antriebssteuerung (20) des Roboters (15), die die Anfrage des Bedieners verarbeitet, um die elektrische Nocke zu aktivieren und den Roboter (15) in dem eingeschränkten Raum (Sr), der auf der Ebene der Steuerungseinrichtung (20) freigegeben und programmiert ist, im Inneren des Bewegungsvolumens (V) laufen zu lassen,
- mindestens eine Pufferzone, die in dem eingeschränkten Raum (Sr), in den der Roboter (15) eingreift, angeordnet ist und die als eine Plattform (25) gestaltet ist, um mittels des Roboters (15) ein vorläufiges Ablegen der durch die Verpackungsmaschine (2) hergestellten Kisten (11) zu ermöglichen, wobei die Plattform (25) über den Roboter (15) zugänglich ist und die Steuereinrichtung (20) des Roboters (15) so programmiert ist, dass der Roboter (15) die durch die Verpackungsmaschine (2) hergestellten Kisten (11) während des Entnahmevorgangs der fertigen Palette und während des Einstellens einer neuen aufzufüllenden Palette vorläufig ablegt.

2. Anordnung nach Anspruch 1, **dadurch gekennzeichnet, dass** sie auf der Ebene der Steuereinrichtung (20) des Roboters ein Mittel zum Verändern der Bewegungsgeschwindigkeit des Roboters (15) und insbesondere zum Vermindern der Geschwindigkeit während der Laufphase des Roboters (15) in dem ihm zugewiesenen eingeschränkten Raum (Sr) aufweist.

3. Anordnung nach Anspruch 1, **dadurch gekennzeichnet, dass** sie auf der Ebene der Steuereinrichtung (20) des Roboters (15) ein Mittel zum Definieren der Arbeitsräume aufweist, in denen dem Roboter (15) gestattet ist, zu laufen, und ein Mittel, um seinen sofortigen und umfassenden Stillstand auszulösen, wenn er den gestatteten Räume zum Laufen verlässt.

4. Anordnung nach Anspruch 1, **dadurch gekennzeichnet, dass** sie einen mit der Tür (7) verknüpften Sensor (29) aufweist, der den Zugang zur Palettierungsstation ermöglicht und über die Steuerungseinrichtung (20) des Roboters (15) die Fortführung seiner Aktivitäten in seinem eingeschränkten Raum (Sr) gestattet, wenn der Bediener den Zugang zur Palettierungsstation angefragt hat, oder den sofortigen und umfassenden Stillstand der Anordnung auslöst, und zwar in dem Fall einer fehlenden Zugangsanfrage oder in dem Fall, in dem die Tür (7) vor Empfang der Freigabe offen ist, die mittels einer mit der Schalteinrichtung verknüpften Leuchtanzeige gegeben wird.

5. Anordnung nach Anspruch 1, **dadurch gekennzeichnet, dass** das Eindringerfassungsmittel (30) eine immaterielle Barriere ist und so angeordnet ist, um das Einführen einer leeren Palette zu ermöglichen und um in dem Fall des Eindringens des Bedieners oder anderes den sofortigen und umfassenden Stillstand der Anordnung auszulösen.

6. Anordnung nach Anspruch 5, **dadurch gekennzeichnet, dass** sie ein mit der immateriellen Barriere (30) verknüpftes Sperrmittel für letztere aufweist, das mit photoelektrischen Zellen (35, 36) ausgebildet ist, um die Entnahme der gefüllten Palette zu ermöglichen, ohne den Notstillstand der Anordnung auszulösen.

7. Anordnung nach Anspruch 1, **dadurch gekennzeichnet, dass** sie ein Signalisierungsmittel für das Ende eines Zyklus, in dem eine Palette mit Kisten (11) von Produkten vorbereitet wird, die die Verpackungsmaschine (2) verlassen, aufweist, wobei das Mittel mit einer Lichthupe (27) ausgebildet wird.

8. Anordnung nach Anspruch 1, **dadurch gekennzeichnet, dass** sie in dem eingeschränkten Raum (Sr) eine durch den Roboter (15) zugängliche ergänzende Vorrichtung aufweist, insbesondere eine Etikettierungsstation (23).

9. Anordnung nach Anspruch 1, **dadurch gekennzeichnet, dass** sie in dem eingeschränkten Raum (Sr) eine durch den Roboter (15) zugängliche ergänzende Vorrichtung aufweist, um Ausschuss nach außerhalb der Anordnung zu entfernen, insbesondere ein Förderband (22).
